# DEMANDE DE BREVET EUROPEEN

(11) **EP 1 199 510 A1**
(43) Date de publication de la demande: **24.04.2002**
(21) Numéro de dépôt: 01402723.9
(22) Date de dépôt: 19.10.2001
(51) Int. Cl.: F17C 13/04, F17C 1/16, F17C 13/02

(54) **Dispositif et procédé de stockage de gaz sous pression**

(30) Priorité: 19.10.2000 FR 0013381
(71) Demandeur: L'air Liquide, S.A. à Directoire et Conseil de Surveillance pour l'Etude et l'Exploitation des Procédés Georges Claude, 75321 Paris Cedex 07 (FR)
(72) Inventeur: Pelloux-Gervais, Pierre, 38180 Seyssins (FR); Sanglan, Patrick, 38180 Seyssins (FR)
(74) Mandataire: Le Moenner, Gabriel

(57) **Abrégé**

Le dispositif comprend au moins un récipient (1) pour le gaz du type haute pression comportant un conduit de sortie auquel est associé un moyen (5) assurant une fuite calibrée obturable, le gaz étant à l'état gazeux dans ce récipient dans une gamme de pressions s'étendant environ de 40 à 250 bars et de préférence de 50 à 200 bars et dans une gamme de températures s'étendant environ de 15 K à 210 K et de préférence de 20 K à 200 K, et une enveloppe (2) d'isolation thermique dans laquelle est disposé le récipient (1).

Utilisation: stockage de gaz comprimés notamment pour leur transport, par exemple de gaz combustible dans un véhicule à moteur électrique alimenté par pile à combustible.

## Description

L'invention concerne le stockage et le transport de gaz et plus particulièrement un dispositif et un procédé de stockage de gaz sous pression permettant le stockage et le transport de gaz sous une forme n'impliquant pas préalablement un traitement long et onéreux.

A l'heure actuelle, on stocke et on transporte les gaz dans des récipients, à l'état liquide, ou à l'état gazeux sous pression à température ambiante.

La liquéfaction des gaz est coûteuse financièrement et énergétiquement ; notamment, dans le cas de l'hydrogène, la température est très basse (20 K), la chaleur latente est élevée, et il est nécessaire de passer par une phase de transformation ortho-para.

Le stockage sous pression (dit stockage HP), par exemple vers 200 bars, nécessite des bouteilles relativement lourdes, pour une quantité de gaz relativement faible. L'augmentation de la pression (stockage sous très haute pression, ou THP) implique dans l'état actuel de la technique, des bouteilles à enroulement filamentaire, mais ces bouteilles sont d'un coût élevé, et les moyens de compression ne sont pas adaptés aux gros débits ; en outre, pour un gaz tel que l'hydrogène, le stockage a 700 bars et 290 K ne représente que 425 Nm³ de gaz par mètre cube de volume de conteneur, c'est-à-dire moins de 60% du volume sous forme liquide à 2 atmosphères en pression absolue (750 Nm³ de gaz par mètre cube de volume de conteneur).

Il en résulte que dans un tel cas, la mise du gaz sous très haute pression ne présente pas un intérêt déterminant.

L'invention a pour but de remédier à ces inconvénients des dispositifs connus, et plus particulièrement de permettre de stocker, notamment en vue de son transport, le maximum de gaz sous le volume et le poids le plus faible possible, au moindre coût.

A cette fin, l'invention concerne un dispositif de stockage de gaz sous pression, comprenant au moins un récipient pour le gaz du type haute pression comportant un conduit de sortie auquel est associé un moyen assurant une fuite calibrée obturable, le gaz étant à l'état gazeux dans ce récipient dans une gamme de pressions s'étendant environ de 40 à 250 bars et de préférence de 50 à 200 bars et dans une gamme de températures s'étendant environ de 15 K à 210 K et de préférence de 20 K à 200 K, et une enveloppe d'isolation thermique dans laquelle est disposé le récipient.

L'invention concerne également un procédé de stockage de gaz sous pression, caractérisé en ce qu'on stocke le gaz dans un récipient thermiquement isolé sous forme gazeuse à une pression entre 40 et 250 bars et une température entre 15 et 210 K, et on ménage une fuite contrôlée du gaz contenu dans le récipient lorsque ce dernier n'est pas soutiré.

Grâce à ces caractéristiques, par exemple pour l'hydrogène, il est possible de traiter de grandes quantités de gaz en peu de temps au moyen des installations de compression classiques à gros débit, sans transformation ortho-para grande consommatrice d'énergie, et en utilisant des bouteilles de poids relativement faible en mettant en oeuvre des matériaux convenablement choisis.

L'invention peut de plus présenter une ou plusieurs des caractéristiques suivantes :
- le récipient comporte des moyens de récupération du froid de détente du gaz ;
- le récipient est muni de moyens formant échangeur de chaleur adaptés pour être mis en oeuvre avant son remplissage en gaz froid en vue de le refroidir avant son remplissage ;
- le récipient comporte un conduit de sortie muni d'un robinet de commande de sortie, et le moyen assurant une fuite calibrée obturable comprend une dérivation en parallèle sur le robinet ;
- le dispositif comporte plusieurs récipients à l'intérieur d'une enveloppe ;
- le dispositif comporte au moins un récipient à l'intérieur d'un Dewar contenant, outre le récipient, de l'azote liquide ;
- le récipient contient un gaz à une pression de l'ordre de 200 bars ;
- le récipient contient de l'hydrogène à l'état gazeux, et à une température comprise dans une gamme s'étendant environ de 40 à 120 K ;
- le récipient contient de l'hydrogène à l'état gazeux, et à une température de l'ordre de 80 K, par exemple 77 K ;
- le récipient contient de l'hélium à l'état gazeux, et à une température comprise dans une gamme s'étendant environ de 20 à 80 K ;
- le récipient contient du néon à l'état gazeux, et à une température comprise dans une gamme s'étendant environ de 50 à 70 K ;
- le récipient contient du monoxyde de carbone à l'état gazeux, et à une température comprise dans une gamme s'étendant environ de 140 à 200 K ; et
- le récipient contient du méthane à l'état gazeux, et à une température comprise dans une gamme s'étendant environ de 145 à 200 K.

D'autres caractéristiques et avantages de l'invention ressortiront de la description qui va suivre de formes de réalisation de l'invention données à titre d'exemples non limitatifs, illustrée par les dessins joints dans lesquels :
- la figure 1 est une section longitudinale schématique d'un dispositif selon une première forme de réalisation de l'invention, pouvant être notamment un dispositif de stockage d'hydrogène,
- la figure 2 est une section longitudinale schématique d'un dispositif selon une deuxième forme de réalisation de l'invention,
- la figure 3 est une section transversale schématique d'un dispositif selon une troisième forme de réalisation de l'invention,
- la figure 4 est une section transversale schématique d'un dispositif selon une quatrième forme de réalisation de l'invention, et
- la figure 5 est une section longitudinale schématique d'une variante de récipient pour équiper une autre forme de réalisation du dispositif selon l'invention.

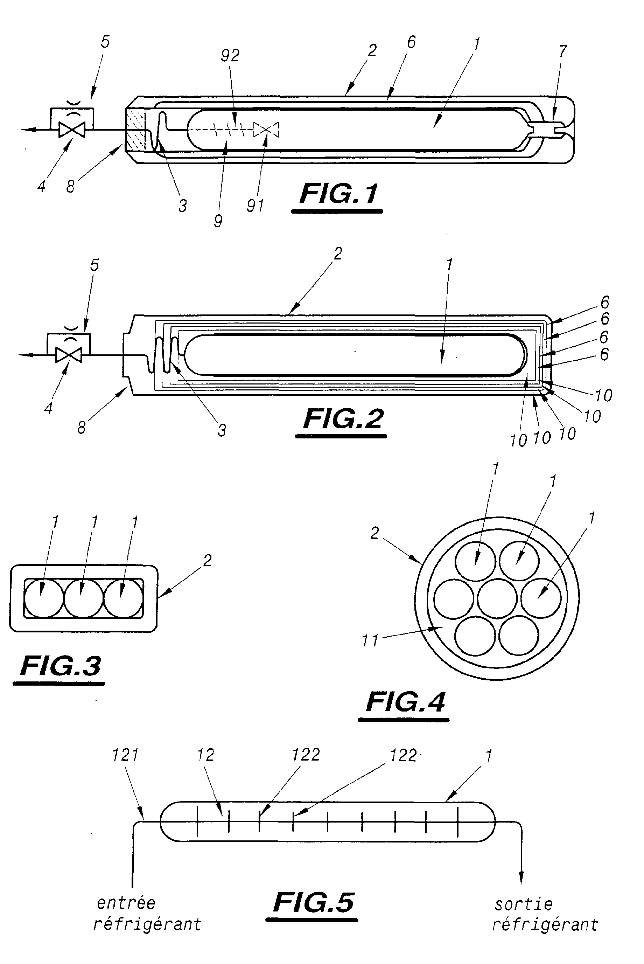

Le dispositif selon l'invention représenté sur la figure 1 comprend un récipient pour le gaz à l'état gazeux, sous la forme d'une bouteille 1, entouré par une enveloppe 2 thermiquement isolante généralement à double paroi.

La bouteille est une bouteille haute pression comprenant un conduit de sortie muni d'un col de cygne 3 à la suite duquel est disposé un robinet 4 de commande de sortie auquel est associée en parallèle une dérivation 5 assurant en sortie de conduit une fuite calibrée, obturable.

Le gaz contenu dans la bouteille est ici de l'hydrogène comprimé à 200 bars à l'état gazeux et à une température de l'ordre de 80 K, plus précisément ici 77 K, ce qui évite toute transformation ortho-para, mais en fait la gamme des pressions possibles pour l'hydrogène s'étend environ de 50 à 250 bars et celle des températures de 40 à 120 K. Le cas 80 K, 200 bars est bien adapté pour constituer une capacité d'alimentation de pile à combustible pour moteur de véhicule électrique, et la fuite nécessaire à défaut d'appareillage de refroidissement du dispositif peut être mise à profit pour maintenir la pile en température et/ou recharger les batteries tampons.

L'enveloppe 2 isolant la bouteille de l'ambiance extérieure est conçue en fonction du taux de perte admissible, c'est-à-dire du taux de perte possible pour recharger des batteries ou alimenter un autre dispositif. On peut par exemple choisir une enveloppe 2 à isolation thermique poussée dite du type super-isolé (ou encore type S.I.) sous vide afin de limiter la consommation de gaz quand la pile n'est pas utilisée ; la « super-isolation » peut être de type classique ou à un ou plusieurs écrans 6 internes raccordés comme on le verra dans la suite, en fonction des besoins. Dans le cas d'une utilisation pour un véhicule à moteur électrique à pile à combustible, la solution la mieux adaptée consiste à utiliser une enveloppe 2 super-isolée sous vide avec une configuration à un écran 6 raccordé, avec au moins une extrémité isolée par un matériau mousse (figure 1). Dans ce cas, la fuite nécessaire pour maintenir la pression en dessous de 200 bars permet d'engendrer une puissance électrique d'environ 300 watts.

Dans le dispositif représenté sur la figure 1, le fond de la bouteille est séparé du fond de l'enveloppe par une entretoise de centrage 7 constituée par une colonnette percée d'un canal longitudinal dans les extrémités duquel sont insérées des saillies respectives de la bouteille et de l'enveloppe. L'extrémité opposée de l'enveloppe présente un col dont le diamètre est légèrement supérieur au diamètre de la bouteille afin que la bouteille puisse être introduite dans l'enveloppe, et ce col, par exemple en acier inoxydable, en verre époxy, ou en inconel (marque déposée), est garni d'un bouchon 8 en matériau mousse isolant thermique traversé par le conduit de sortie de la bouteille.

Le conduit de sortie de la bouteille peut se prolonger à l'intérieur de celle-ci par des moyens 9 de récupération du froid produit par la détente du gaz, comprenant une valve de détente 91 et un échangeur thermique 92 ; c'est alors à la source de froid constituée par ces moyens 9, par exemple à l'échangeur thermique 92, que sont raccordés le ou les écrans 6 de l'enveloppe 2.

On peut noter que le dispositif selon l'invention, de stockage de gaz sous la forme de gaz comprimé, permet de multiplier environ par trois les capacités de transport d'hydrogène par rapport aux dispositifs connus, et qu'en outre il est possible de diminuer notablement la pression (jusqu'à environ 50 bars) en transportant cependant la même quantité d'hydrogène que dans le même volume pressurisé à 200 bars à la température ambiante, avec un gain sensible sur la masse du dispositif.

Comme on l'a vu, en variante, l'enveloppe peut contenir un ou plusieurs écrans (par exemple jusqu'à cinq écrans) raccordés et un matériau mousse de part et d'autre de chaque écran.

La forme de réalisation de la figure 2, sur laquelle les éléments correspondant à des éléments de la figure 1 portent les mêmes repères numériques, comporte une telle enveloppe 2 à quatre écrans raccordés à une source interne de froid et cinq couches 10 de mousse (ou autre isolant thermique) ; la bouteille 1 de cette figure 2 est identique à celle de la figure 1, à cela près que par suite de la différence de structure interne de l'enveloppe, elle ne comporte pas de saillie de centrage, et son conduit de sortie est muni d'un col de cygne 3 double.

L'enveloppe peut également être indépendante de la bouteille haute pression ; elle peut par exemple consister en un Dewar sec ou réfrigéré à l'azote liquide.

La figure 3 montre une forme de réalisation dans laquelle l'enveloppe 2 est un Dewar sec présentant une section transversale de forme rectangulaire et dans laquelle trois bouteilles 1 s'étendant parallèlement dans un même plan sont juxtaposées côte à côte. La figure 4 montre une forme de réalisation dans laquelle l'enveloppe 2 est un Dewar présentant une section transversale de forme circulaire et dans laquelle sept bouteilles 1 s'étendant parallèlement sont disposées côte à côte ; l'une des bouteilles est disposée centralement en considérant la section transversale de l'enveloppe, et les six autres sont réparties autour de la bouteille centrale ; l'espace entre les bouteilles, et entre les bouteilles et l'enveloppe, peut être rempli d'azote liquide 11 ; en variante, les bouteilles peuvent être remplacées par des tubes reliés « en série » de manière à constituer un serpentin, l'un des deux tubes d'extrémités étant équipé d'un conduit à col de cygne avec un robinet et une dérivation (non représentés), et éventuellement des moyens de récupération du froid de détente du gaz, comme les bouteilles des formes de réalisation des figures 1 et 2. La présence d'azote liquide assure une grande autonomie sans dégazage, et dans ce cas la fuite peut être supprimée par obturation du conduit de sortie en aval du robinet 4.

La figure 5 montre une forme de réalisation dans laquelle sont adjoints à la bouteille des moyens formant échangeur 12 permettant le refroidissement préalable de celle-ci avant son remplissage en gaz froid quand elle est à température ambiante. Ces moyens formant échangeur 12 peuvent être extérieurs à la bouteille, ou intérieurs comme sur la figure 5, montrant une bouteille 1 haute pression traversée longitudinalement par un conduit 121 pouvant être parcouru par de l'azote liquide, ce conduit portant extérieurement des ailettes 122 d'échange thermique, le conduit 121 et les ailettes 122 constituant les moyens formant échangeur 12.

L'invention peut être appliquée au stockage, en vue éventuellement d'un transport, de gaz autre que l'hydrogène, dans des gammes de température et de pression appropriées.

Par exemple, des dispositifs selon l'invention peuvent être utilisables, avec des modifications minimes,
- pour l'hélium entre 20 et 80 K, autour de 200 bars, ce qui correspond à une densité comprise entre 1,5 et 0,7 fois la densité de l'hélium liquide à la pression atmosphérique ;
- pour le néon entre 50 et 70 K, autour de 200 bars, ce qui correspond à une densité comprise entre 0,9 et 0,5 fois la densité du néon liquide à la pression atmosphérique,
- pour le monoxyde de carbone entre 140 et 200 K, autour de 200 bars, ce qui correspond à une densité comprise entre 0,8 et 0,5 fois la densité du monoxyde de carbone liquide à la pression atmosphérique,
- pour le méthane entre 145 et 200 K, autour de 200 bars, ce qui correspond à une densité comprise entre 0,95 et 0,75 fois la densité du méthane liquide à la pression atmosphérique, ou encore 1,1 à 0,85 fois la densité du méthane liquide à 7 atmosphères en pression absolue,
car bien entendu l'invention n'est pas limitée aux formes de réalisation ci-dessus décrites et représentées, et on pourra en prévoir d'autres sans sortir du cadre des revendications ci-après.

## Revendications

1. Dispositif de stockage de gaz sous pression, comprenant au moins un récipient (1) pour le gaz du type haute pression comportant un conduit de sortie auquel est associé un moyen (5) assurant une fuite calibrée obturable, le gaz étant à l'état gazeux dans ce récipient dans une gamme de pressions s'étendant environ de 40 à 250 bars et de préférence de 50 à 200 bars et dans une gamme de températures s'étendant environ de 15 K à 210 K et de préférence de 20 K à 200 K, et une enveloppe (2) d'isolation thermique dans laquelle est disposé le récipient (1).

2. Dispositif selon la revendication 1, **caractérisé en ce que** le récipient (1) comporte des moyens (9) de récupération du froid de détente du gaz.

3. Dispositif selon l'une des revendications 1 et 2, **caractérisé en ce que** le récipient (1) est muni de moyens (12) formant échangeur de chaleur adaptés pour être mis en oeuvre avant son remplissage en gaz froid en vue de le refroidir avant son remplissage.

4. Dispositif selon l'une des revendications 1 à 3, **caractérisé en ce que** le récipient (1) comporte un conduit de sortie muni d'un robinet (4) de commande de sortie, et le moyen assurant une fuite calibrée obturable comprend une dérivation (5) en parallèle sur le robinet.

5. Dispositif selon l'une des revendications 1 à 4, **caractérisé en ce que** le récipient (1) est une bouteille.

6. Dispositif selon l'une des revendications 1 à 5, **caractérisé en ce qu'**il comporte plusieurs récipients (1) à l'intérieur d'une enveloppe (2).

7. Dispositif selon l'une des revendications précédentes, **caractérisé en ce qu'**il comporte au moins un récipient (1) à l'intérieur d'un Dewar contenant, outre le récipient, de l'azote liquide.

8. Dispositif selon l'une des revendications précédentes, **caractérisé en ce que** le récipient (1) contient un gaz à une pression de l'ordre de 200 bars.

9. Dispositif selon l'une des revendications précédentes, **caractérisé en ce que** le récipient (1) contient de l'hydrogène à l'état gazeux, et à une température comprise dans une gamme s'étendant environ de 40 à 120 K.

10. Dispositif selon la revendication 9, **caractérisé en ce que** le récipient (1) contient de l'hydrogène à l'état gazeux, et à une température de l'ordre de 80 K.

11. Dispositif selon l'une des revendications 1 à 9, **caractérisé en ce que** le récipient (1) contient de l'hélium à l'état gazeux, et à une température comprise dans une gamme s'étendant environ de 20 à 80 K.

12. Dispositif selon l'une des revendications 1 à 9, **caractérisé en ce que** le récipient (1) contient du néon à l'état gazeux, et à une température comprise dans une gamme s'étendant environ de 50 à 70 K.

13. Dispositif selon l'une des revendications 1 à 9, **caractérisé en ce que** le récipient (1) contient du monoxyde de carbone à l'état gazeux, et à une température comprise dans une gamme s'étendant environ de 140 à 200 K.

14. Dispositif selon l'une quelconque des revendications 1 à 9, **caractérisé en ce que** le récipient (1) contient du méthane à l'état gazeux, et à une température comprise dans une gamme s'étendant environ de 145 à 200 K.

15. Procédé de stockage de gaz sous pression, **caractérisé en ce qu'**on stocke le gaz dans un récipient thermiquement isolé sous forme gazeuse à une pression entre 40 et 250 bars et une température entre 15 et 210 K, et on ménage une fuite contrôlée du gaz contenu dans le récipient lorsque ce dernier n'est pas soutiré.

16. Procédé selon la revendication 15, **caractérisé en ce qu'**on stocke le gaz à une pression d'environ 200 bars.

17. Procédé selon la revendication 15 ou 16, **caractérisé en ce que** le gaz est l'hydrogène à une température entre environ 40 K et 100 K.
